Europäisches Patentamt

European Patent Office

Office européen des brevets

(11) Veröffentlichungsnummer: **0 049 820**
**A1**

(12) ## EUROPÄISCHE PATENTANMELDUNG

(21) Anmeldenummer: **81107772.6**

(22) Anmeldetag: **30.09.81**

(51) Int. Cl.³: **A 47 J 31/54**

(30) Priorität: **13.10.80 DE 3038606**

(43) Veröffentlichungstag der Anmeldung:
**21.04.82 Patentblatt 82/16**

(84) Benannte Vertragsstaaten:
**AT BE CH DE FR GB IT LI LU NL SE**

(71) Anmelder: **Bleckmann & Co.**
**Moserstrasse 29**
**D-5020 Salzburg(AT)**

(72) Erfinder: **Bleckmann, Ingo, Dr. Dipl.-Ing.**
**Ignaz-Rieder-Kai 11**
**A-4020 Salzburg(AT)**

(74) Vertreter: **Patentanwälte Liedl, Nöth, Zeitler**
**Steinsdorfstrasse 21-22**
**D-8000 München 22(DE)**

(54) **Durchlauferhitzer für elektrisch beheizte Geräte zur Herstellung von Aufgussgetränken.**

(57) Ein Durchlauferhitzer für elektrisch beheizte Geräte zur Herstellung von Aufgußgetränken mit einem Wasserdurchlaufrohr (1), einem seitlich an diesem befestigten Rohrheizkörper (2) und gegebenenfalls einer Abdeckplatte (3) zum Abstellen des das Aufgußgetränk aufnehmenden Gefäßes, mit folgenden Merkmalen:

a) Die für das Wasserdurchlaufrohr (1) verwendete Legierung besitzt eine Wärmeleitfähigkeit $\lambda$ unter 0, 5 J/cmsgrd bei 20°C;

b) der Rohrheizkörper (2) ist im Abstand von der eventuellen Abdeckplatte (3) seitlich unten am Wasserrohr (1) angeordnet und mit diesem durch eine schmale Wärmebrücke (4), z.B. in Form einer Lötverbindung, verbunden;

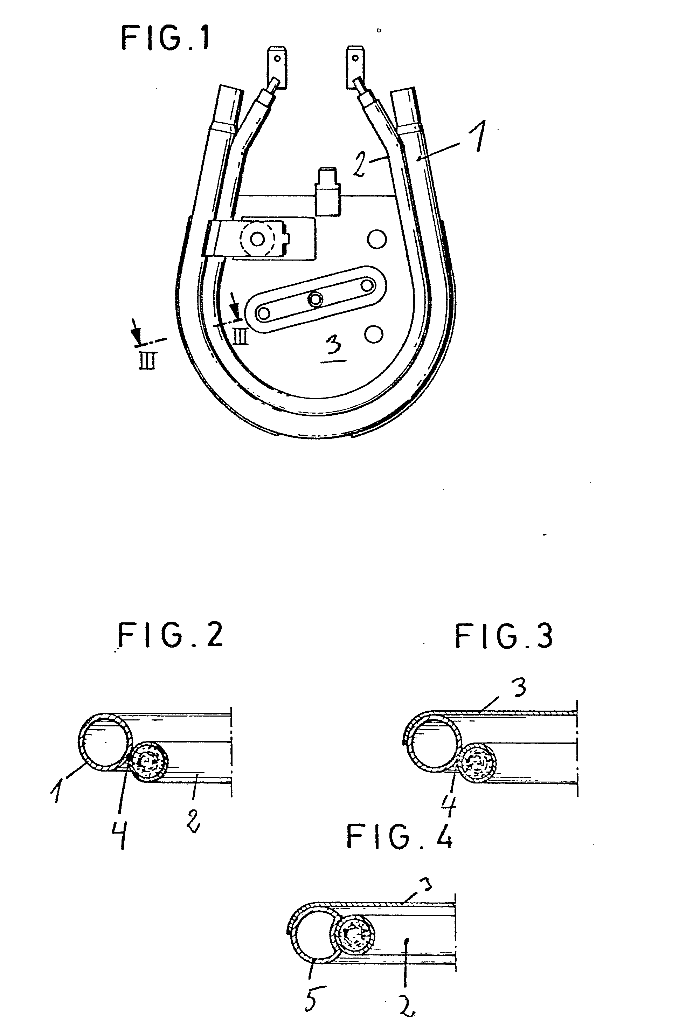

c) die Wandstärke des Wasserrohres (1) liegt unter 0, 75 mm, insbesondere in der Größenordnung von 0, 5 mm (Fig. 3).

FIG.3

EP 0 049 820 A1

Durchlauferhitzer für elektrisch beheizte Geräte
zur Herstellung von Aufgußgetränken

Die Erfindung betrifft einen Durchlauferhitzer für elektrisch beheizte Geräte zur Herstellung von Aufgußgetränken mit einem Wasserdurchlaufrohr, einem seitlich an diesem befestigten Rohrheizkörper und gegebenenfalls einer Abdeckplatte zum Abstellen des das Aufgußgetränk aufnehmenden Gefäßes.

Durchlauferhitzer der in Rede stehenden Art sind in zahlreichen Variationen bekannt. Bei einer Gattung werden ein hufeisenförmig gebogenes Wasserrohr und ein ebenfalls hufeisenförmig gebogener Rohrheizkörper mittels einer Abdeckplatte abgedeckt, deren Ränder dann um den Rohrheizkörper oder um das Wasserrohr herumgebogen werden, wodurch die beiden genannten Teile zusammengehalten werden. Durch die Abdeckplatte ergibt sich eine flächenförmige Wärmeleitung auf das abgestellte Gefäß, welches das Filtrat des Aufgußgetränkes aufnimmt. Auf diese Weise wird das Aufgußgetränk, z.B. der Kaffee, auch nach Beendigung des Filtervorganges warmgehalten.

Aus der DE-AS 27 41 446 ist ein Durchlauferhitzer für Kaffeemaschinen mit einem elektrischen Rohrheizkörper und einem am Rohrheizkörper entlanggeführten sowie mit dem Rohrheizkörper wärmeleitend verbundenen Wasserführungsrohr bekannt. Es wird nun festgestellt, daß eine um etwa $2^{o}$C höhere Brühtemperatur erreicht werden kann, wenn - vermutlich anstelle eines Wasserrohres aus Kupfer - ein solches verwendet wird, welches aus einer Kupfer-Nickellegierung mit bis zu 30 % Nickel und also etwa 70 % Kupfer besteht. Bevorzugt werden etwa 10 % Nickel, 3 % Beimengungen und etwa 87 % Kupfer.

E 125

- 2 -

Die Legierung wurde aus einer Vielzahl von denkbaren Legierungen ausgewählt (Spalte 2, Zeilen 34 und 35). Andere Legierungen, gleichgültig ob mit besserer oder schlechterer Leitfähigkeit, führen bei der angegebenen Konstruktion nicht zu dem angestrebten Ergebnis, nämlich zu einer Erhöhung der mittleren Brühtemperatur. Der Erfolg wird darauf zurückgeführt, daß gerade das angegebene Legierungsmaterial eine genau dosierte Wärmeübertragung vom Rohrheizkörper über die Wand des Wasserführungsrohres zum aufheizenden Wasser bewirken würde. Entsprechende experimentelle Nachprüfungen bestätigten die in der Vorveröffentlichung enthaltenen Angaben.

Eingehende Untersuchungen zeigten nun, daß bei den bekannten Ausführungsformen ein erheblicher Teil, d.h. im allgemeinen mehr als die Hälfte, der von dem Rohrheizkörper auf das Wasserrohr fließenden Wärme auf den - im Querschnitt gesehen - oberen Sektor des Wasserrohres übertragen wird. Dies führt dazu, daß sich im oberen Teil des Wasserrohres große Dampfblasen bilden, durch die einerseits die Wärmeübertragung auf das durch das Wasserrohr fließende Wasser verschlechtert wird und die andererseits nur sehr langsam kondensieren. Eine eingehende Untersuchung von insgesamt 63 verschiedenen Ausführungsformen, welche sich auf dem Markt befinden, zeigte, daß die Temperatur des Filtrates jeweils bei 70 bis 76°C lag. Im Sinne einer optimalen Ausnutzung, z.B. des Kaffeepulvers und im Sinne einer Extraktion von typischen Aromastoffen wäre jedoch eine erheblich höhere Filtrattemperatur anzustreben. Hierin liegt auch der Grund, weshalb bei den bekannten Kaffeemaschinen nicht voll die Geschmacksqualität erzielt wird, wie sie sich beispielsweise ergibt, wenn, wie in früheren Zeiten, kochendes Wasser über das in einen Filter eingeschüttete Kaffeepulver geschüttet wird.

E 125

0049820

- 3 -

Der Grund, weshalb bei der Ausführungsform gemäß der DE-AS 27 41 446 keine weitere Steigerung der Brühtemperatur über die angegebenen 2$^o$C hinaus durch Veränderung der Legierungszusammensetzung möglich ist, dürfte folgender sein:

Wenn ein Wasserrohr mit einer schlechteren Wärmeleitfähigkeit, z.B. unter 0.5 J/cmsgrd gewählt wird, dann verringert sich auch der Wärmefluß auf das Wasserrohr, so daß wiederum ein größerer Teil der Wärme über die am Rohrheizkörper anliegende Abdeckplatte bzw. über die die Abdeckplatte haltenden Lappen auf die Oberseite des Wasserrohres fließt, wodurch es dann zu dem eingangs geschilderten Effekt kommt.

Der Erfindung liegt nun die Aufgabe zugrunde, einen Durchlauferhitzer der in Rede stehenden Art vorzuschlagen, mit welchem eine weitere beachtliche Erhöhung der Brühtemperatur erreicht wird. Insbesondere sollen Filtrattemperaturen, d.h. Temperaturen des aus dem Kaffeepulver auslaufenden Filtrates in der Größenordnung von 83 - 85$^o$C erreicht werden im Vergleich zu Filtrattemperaturen von max. 80$^o$C, welche mit der Ausführungsform gemäß der DE-AS 27 41 446 erreicht werden können.

Die Lösung dieser Aufgabe ergibt sich aus den Merkmalen des Hauptanspruchs. Die Unteransprüche beschreiben bevorzugte Ausführungsformen.

Gemäß der Erfindung wird also angestrebt, daß sich an der Seite gegebenenfalls bis in den unteren Bereich des Wasserrohres kleine punktförmige Dampfblasen bilden, die sich von der Innenwand des Wasserrohres lösen, vom Wasserstrom mitgerissen werden bzw. in diesem aufsteigen. Wegen der geringen Größe der Dampfblasen erfolgt ziem-

E 125

lich unmittelbar eine Kondensation derselben. Die abgegebene Kondensationswärme und der Wegfall der isolierenden Wirkung einer im oberen Bereich des Wasserdurchlaufrohres stehenden Dampfblase führt nun überraschenderweise zur erheblichen Erhöhung der Filtrattemperatur.

Die Praxis zeigte nun, daß zur Realisierung des angestrebten Zieles eine Reihe von Maßnahmen zweckmäßig sind, die sich gegenseitig unterstützen und ineinandergreifen, nämlich:

a) Es soll eine Wärmebrücke geschaffen werden, die vom Rohrheizkörper seitlich oder seitlich unten in das Wasserrohr führt. Dies wird am besten durch eine relativ schmale Lötverbindung an dieser Stelle zwischen Rohrheizkörper und Wasserrohr erreicht.

b) Das Wasserrohr soll keine zu hohe Wärmeleitfähigkeit besitzen, damit nicht zuviel Wärme über den Mantel des Wasserrohres nach oben abfließt. Der Effekt ist auch bei der Wahl des Durchmessers im Verhältnis zur Wandstärke zu berücksichtigen. Je geringer die Wandstärke ist, desto kürzer ist der Weg des Wärmeflusses seitlich in das Wasserdurchlaufrohr und desto schlechter ist die Wärmeableitung über den Rohrmantel nach oben. Man wählt dementsprechend Materialien, die relativ dünne Wandstärken zulassen.

c) Rohrheizkörper aus Aluminium sind im allgemeinen nur bis 300 bis 400°C, solche aus Kupfer bis 400°C belastbar. Wenn die Rohrheizkörpertemperatur erhöht wird, ergibt sich bei der neuartigen Ausführungsform auch eine höhere Temperatur an der seitlichen Innenwand des Wasserdurchlaufrohres. Dadurch wird die Bildung

E 125

von kleinen Gasblasen gefördert. Am besten haben sich dementsprechend Rohrheizkörper mit einem Chromnickelmantel bewährt, die bis 700$^o$, gegebenenfalls auch 800$^o$C belastbar sind.

d) Ein Effekt, der noch nicht in allen Einzelheiten geklärt ist, liegt darin, daß ein Wasserrohr aus einem austenitischen rostfreien Stahl gewählt wird, der mit Molybdän legiert ist. Einerseits weist dieses Material eine gegenüber z.B. Kupfer erheblich schlechtere Wärmeleitfähigkeit $\lambda$ in der Größenordnung von 0,25 J/cmsgrd auf, was in dem obengenannten Sinn liegt. Darüber hinaus ist dieses Material sehr korrosionsbeständig. Ein Korrosionsangriff auf die Innenwand des Wasserrohres scheint jedoch den Effekt der Bildung sehr kleiner Dampfblasen zu beeinträchtigen. Weiterhin scheint das Material aufgrund seiner Struktur eine optimale Wärmeleitung im Sinne der Bildung punktförmiger Dampfblasen zu begünstigen.

e) Eine gewisse Bedeutung ist der Haftung der Dampfblasen an der seitlichen Rohrinnenwand des Wasserrohres beizumessen. Die Oberfläche soll dementsprechend sehr glatt und ohne Korrosionsunebenheiten sein, so daß sich die Dampfblasen unmittelbar nach der Bildung von der Rohrinnenwand lösen können.

Die beiliegenden Zeichnungen dienen der weiteren Erläuterung der Erfindung. Es zeigen:

Fig. 1    eine Unteransicht eines Durchlauferhitzers;

Fig. 2    eine Teilschnittansicht;

E 125

Fig. 3     eine Teilschnittansicht längs der Linie III-III in Fig. 1;

Fig. 4     eine Teilschnittansicht einer abgewandelten Ausführungsform;

Fig. 5     eine Teilschnittansicht einer weiteren abgewandelten Ausführungsform und

Fig. 6     eine Teilansicht einer dritten, abgewandelten Ausführungsform.

Der dargestellte Durchlauferhitzer besteht unter Bezugnahme auf
Fig. 1 aus einem hufeisenförmig gebogenen Wasserrohr 1 und aus
einem ebenfalls hufeisenförmig gebogenen Rohrheizkörper 2. Wenn
eine Abdeckplatte 3 verwendet werden soll, so kann diese zwar an
dem Wasserrohr 1 anliegen, d.h. um die Außenseite desselben herumgebogen sein. Es sollte jedoch vermieden werden, daß die Deckplatte 3
unmittelbar am Rohrheizkörper 2 anliegt. Allenfalls ist eine strichförmige Anlage zulässig.

Wie aus den Figuren 2 und 3 ersichtlich ist, liegt der Rohrheizkörper 2 seitlich unterhalb an dem Wasserrohr 1 an, wobei zweckmäßigerweise eine in Form eines schmalen Bandes gehaltene Lötstelle 4 vorgesehen ist.

Bei der in Fig. 4 dargestellten Ausführungsform wurde ein im Querschnitt etwa nierenförmiges Wasserrohr 5 verwendet, wobei der Rohrheizkörper 2 in die konkave Einbeulung des Querschnittes eingelegt ist.

E 125

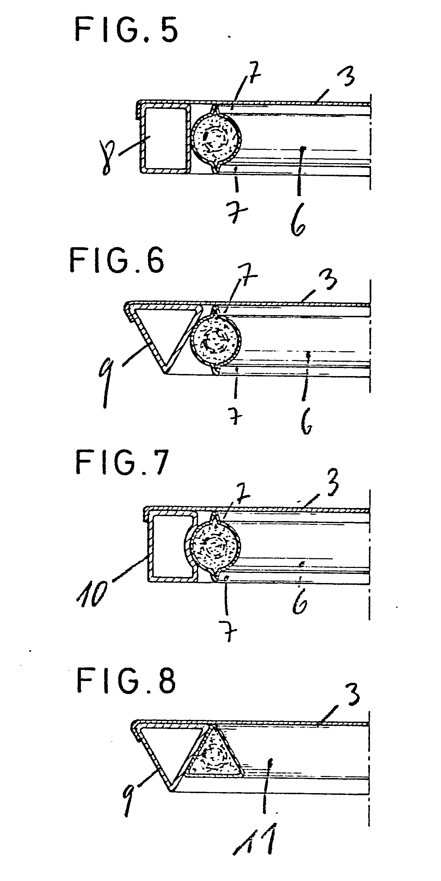

Bei den Ausführungsformen gemäß den Figuren 5 und 6 wurde ein Rohrheizkörper 6 verwendet, dessen Mantel zwei seitlich ausgepreßte Stege 7 besitzt. Da die Rohrheizkörper nach dem Einfüllen des Isoliermaterials zur Verdichtung desselben gepreßt werden müssen, kann durch Wahl eines entsprechenden Preßwerkzeuges dieser Vorgang dazu benutzt werden, die seitlich abstehenden Stege 7 zu bilden.

Der obere Steg 7 des Rohrheizkörpers 6 wird nun, wie dargestellt, jeweils als Abstandshalter gegenüber der Abdeckplatte 3 verwendet. Die Praxis zeigte, daß der Wärmefluß über den oberen Steg 7 auf die Abdeckplatte 3 in Kauf genommen werden kann.

Bei der in Fig. 5 dargestellten Ausführungsform wurde ein im Querschnitt rechtwinkliges Wasserrohr 8 verwendet, wobei der Rohrheizkörper 6 an der längeren Seite des Querschnitts anliegt. Es zeigte sich bei dieser Ausführungsform, daß die senkrecht stehende gerade Seitenwand des Wasserrohres 8 das Abreißen der gebildeten kleinen Dampfbläschen von der Seitenwand besonders begünstigt.

Bei der in Fig. 6 dargestellten Ausführungsform wurde ein dreieckförmiges Wasserrohr 9 verwendet. Gegenüber einem runden Querschnitt hat der dreieckförmige Querschnitt den Vorteil, daß die gebildeten kleinen Dampfbläschen unmittelbar nach oben aufsteigen können, d.h. nicht an der Rohrwandung entlang geleitet werden.

Welche der dargestellten Ausführungsformen gewählt werden oder welche Abwandlungen vorgenommen werden, hängt von der Belastung des Rohrheizkörpers und den gewählten Materialien ab.

E 125

Beispiel 1

Wasserrohr: Material Cunifer 30 = deutsche Werkstoff Nr. 2.0882
30 - 32 % Nickel, maximal 0,06 % Kohlenstoff, 0,5 -
1,5 % Mangan, 0,4 - 1 % Eisen, Rest Kupfer.

Außendurchmesser 10 mm.      $\lambda$ = 0,25 J/cmsgrd.

Wandstärke 0,5 mm.

Rohrheizkörper: Material deutsche Werkstoff Nr. 4306 = 18 - 20 %
Chrom, 8 - 12 % Nickel, maximal 0,03 % Kohlenstoff, Rest Eisen.

Lot = Kupfer ohne Abdeckplatte Rohrheizkörperbelastung 650 W

Filtrattemperatur 84$^{\circ}$C

Beispiel 2

Wasserrohr: CNF 4 = deutsche Werkstoff Nr. 4861 = 19 - 23 % Chrom,
30 - 35 % Nickel, maximal 0,1 % Kohlenstoff, Rest
Eisen.

Außendurchmesser 10 mm Wandstärke 0,5 mm Rohrheizkörper CNFL = deutsche Werkstoff Nr. 4306
(siehe Beispiel 1) Lot = Silber

keine Abdeckplatte

E 125

Rohrheizkörperbelastung  650 W

Filtrattemperatur  $84\,^{\mathrm{o}}$C

**Beispiel 3**

In Beispiel 2 wurde das Material des Wasserrohres bei sonst gleichbleibenden Abmessungen durch folgendes Material ersetzt:

CNFM = deutsche Werkstoff Nr. 4435 = 16 - 18 % Chrom, 10 - 24 % Nickel, maximal 0,03 % Kohlenstoff, maximal 1 % Silizium, 2 - 3 % Molybdän, Rest Eisen.

Filtrattemperatur  $85\,^{\mathrm{o}}$C.

Besonders hervorzuheben ist, daß die nach den Beispielen ausgeführten Durchlauferhitzer im Vergleich zu bekannten Ausführungsformen eine höhere Verzunderungsbeständigkeit und auch eine höhere Lebensdauer bei Verkalkung hatten.

E 125

Patentansprüche:

1. Durchlauferhitzer für elektrisch beheizte Geräte zur Herstellung von Aufgußgetränken mit einem Wasserdurchlaufrohr, einem seitlich an diesem befestigten Rohrheizkörper und gegebenenfalls einer Abdeckplatte zum Abstellen des das Aufgußgetränk aufnehmenden Gefäßes. gekennzeichnet durch eine Kombination folgender Merkmale:

a) die für das Wasserdurchlaufrohr (1, 5, 8, 9) verwendete Legierung besitzt eine Wärmeleitfähigkeit $\lambda$ unter 0, 5 J/cmsgrd bei $20^{\circ}$C;

b) der Rohrheizkörper (2, 6, 11) ist im Abstand von der eventuellen Abdeckplatte (3) seitlich unten am Wasserrohr (1, 5, 8, 9) angeordnet und mit diesem durch eine schmale Wärmebrücke (4), z.B. in Form einer Lötverbindung, verbunden;

c) die Wandstärke des Wasserrohres (1, 5, 8, 9) liegt unter 0, 75 mm, insbesondere in der Größenordnung von 0, 5 mm.

2. Durchlauferhitzer nach Anspruch 1, dadurch gekennzeichnet, daß auch die Legierung für den Rohrheizkörper (2, 6) eine Wärmeleitfähigkeit $\lambda$ unter 0, 5 J/cmsgrd bei $20^{\circ}$C besitzt.

3. Durchlauferhitzer nach Anspruch 1 oder 2, dadurch gekennzeichnet, daß das Wasserrohr aus einem austenitischen rostfreien Stahl besteht.

E 125

4. Durchlauferhitzer nach Anspruch 3, dadurch gekennzeichnet, daß der austenitische rostfreie Stahl zusätzlich mit Molybdän legiert ist.

5. Durchlauferhitzer nach Ansprüchen 1 bis 4, dadurch gekennzeichnet, daß der Rohrheizkörpermantel aus einem Chromnickelstahl besteht.

6. Durchlauferhitzer nach Ansprüchen 1 bis 5, dadurch gekennzeichnet, daß der Rohrheizkörper an das Wasserrohr vorzugsweise mittels eines Kupfer- oder Silberlotes angelötet ist.

7. Durchlauferhitzer nach Ansprüchen 1 bis 6, dadurch gekennzeichnet, daß der Rohrheizkörper (6) seitlich abstehende Stege (7) besitzt, wobei der obere Steg (7) zur Abstützung an der Abdeckplatte (3) dient.

E 125

FIG.1

FIG.2

FIG.3

FIG.4

0049820

½

FIG.5

FIG.6

FIG.7

FIG.8

## 0049820
Nummer der Anmeldung

EP 81 10 7772

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 095 086 (OHNMACHT et al.) | |
| | * insgesamt * | 1 |
| | --- | |
| | DE - A - 2 808 184 (CERU) | |
| | * insgesamt * | 1,5 |
| | --- | |
| | DE - A - 2 507 479 (LICENTIA) | |
| | * Figur 3 * | 1 |
| | --- | |
| | DE - A - 2 652 656 (TÜRK & HILLINGER) | |
| | * Seite 6, Abschnitt 4 * | 1 |
| | --- | |
| | DE - U - 7 703 303 (SIEMENS A.G.) | |
| | * insgesamt * | 1,3 |
| | --- | |
| | DE - U - 7 504 295 (EICHEN AUER) | |
| | * insgesamt * | 1 |
| | --- | |
| | FR - A - 2 183 969 (SIEMENS GmbH) | |
| | * Figur 3 * | 1 |
| | --- | |
| A/D | DE - B - 2 741 446 (SIEMENS A.G.) | |
| | * insgesamt * | 1 |
| | --------- | |

**KLASSIFIKATION DER ANMELDUNG (Int. Cl.)**

A 47 J 31/54

**RECHERCHIERTE SACHGEBIETE (Int. Cl.)**

A 47 J
F 24 H

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15.01.1982 | SCHARTZ |

EPA form 1503.1  06.78